# EUROPEAN PATENT APPLICATION

(11) **EP 2 667 627 A2**
(43) Date of publication of application: **27.11.2013**
(21) Application number: 13000791.7
(22) Date of filing: 15.02.2013
(51) Int. Cl.: H04N 21/422

(54) **Image display apparatus and method for operating the same**

(30) Priority: 22.05.2012 KR 20120054284
(71) Applicant: LG Electronics, Inc., Seoul, 150-721 (KR)
(72) Inventor: Kang, Byeongki, 137-724 Seoul (KR); Song, Kihoon, 137-724 Seoul (KR); Cho, Snaghyun, 137-724 Seoul (KR); Cho, Dukho, 137-724 Seoul (KR); Bae, Ilju, 137-724 Seoul (KR); Yeom, Jungho, 137-724 Seoul (KR); Ok, Hyeongseok, 137-724 Seoul (KR)
(74) Representative: Beyer, Andreas

(57) **Abstract**

A method for operating an image display apparatus using a remote controller includes receiving a signal from the remote controller, calculating display coordinates for pointer display based on the received signal; displaying a first pointer at the calculated display coordinates if the calculated display coordinates are within boundaries of a display screen, and displaying a second pointer at the boundaries of the display screen if the calculated display coordinates move off of the boundaries of the display screen. Accordingly, it is possible to increase movement accuracy and efficiency of the remote controller and increase user convenience.

## Description

### CROSS-REFERENCE TO RELATED APPLICATION

This application claims the priority benefit of Korean Patent Application No. 10-2012-0054284, filed on May 22, 2012 in the Korean Intellectual Property Office, the disclosure of which is incorporated herein by reference.

### BACKGROUND OF THE INVENTION

### 1. Field of the invention

The present invention relates to an image display apparatus and a method for operating the same, and more particularly to an image display apparatus and a method for operating the same, which are capable of increasing movement accuracy and efficiency of a remote controller and increasing user convenience.

### 2. Description of the Related Art

An image display apparatus functions to display images to a user. A user can view a broadcast program using an image display apparatus. The image display apparatus can display a broadcast program selected by the user on a display from among broadcast programs transmitted from broadcast stations. The recent trend in broadcasting is a worldwide transition from analog broadcasting to digital broadcasting.

Digital broadcasting involves transmission of digital audio and video signals. Digital broadcasting offers many advantages over analog broadcasting, such as robustness against noise, less data loss, ease of error correction, and the ability to provide clear, high-definition images. Digital broadcasting also allows interactive viewer services, unlike analog broadcasting.

In order to operate an image display apparatus, a remote controller is used. As operations executed in an image display apparatus have changed, various functions of the remote controller have been further required. Accordingly, in an image display apparatus using a remote controller, various methods for increasing user convenience have been researched.

### SUMMARY OF THE INVENTION

Therefore, the present invention has been made in view of the above problems, and it is an object of the present invention to provide an image display apparatus and a method for operating the same, which are capable of increasing movement accuracy and efficiency of a remote controller and increasing user convenience.

In accordance with an aspect of the present invention, the above and other objects can be accomplished by the provision of a method for operating an image display apparatus using a remote controller, including receiving a signal from the remote controller, calculating display coordinates for pointer display based on the received signal, displaying a first pointer at the calculated display coordinates if the calculated display coordinates are within boundaries of a display screen, and displaying a second pointer at the boundaries of the display screen if the calculated display coordinates move off of the boundaries of the display screen.

In accordance with another aspect of the present invention, there is provided an image display apparatus using a remote controller, including a display configured to display a pointer on a display screen, an interface configured to receive a signal from the remote controller and calculate display coordinates for displaying the pointer based on the received signal, and a controller configured to control a first pointer to be displayed at the calculated display coordinates if the calculated display coordinates are within boundaries of the display screen and a second pointer to be displayed at the boundaries of the display screen if the calculated display coordinates move off of the display screen.

### BRIEF DESCRIPTION OF THE DRAWINGS

The above and other objects, features and other advantages of the present invention will be more clearly understood from the following detailed description taken in conjunction with the accompanying drawings, in which:
- FIG. 1: is a block diagram showing the internal configuration of an image display apparatus according to an embodiment of the present invention;
- FIG. 2: is a block diagram showing the internal configuration of a controller of FIG. 1;
- FIG. 3: is a diagram showing a method of controlling a remote controller of FIG. 1;
- FIG. 4: is a perspective view of a remote controller according to an embodiment of the present invention;
- FIG. 5: is a block diagram showing the internal configuration of a remote controller according to an embodiment of the present invention;
- FIG. 6: is a diagram showing an example of movement of a remote controller;
- FIG. 7: is a flowchart illustrating a method for operating an image display apparatus according to an embodiment of the present invention; and
- FIGS. 8 to 13: are views referred to for describing various examples of the method for operating the image display apparatus of FIG. 7.

### DETAILED DESCRIPTION OF THE PREFERRED EMBODIMENTS

Exemplary embodiments of the present invention will be described with reference to the attached drawings.

The terms "module" and "unit" attached to describe the names of components are used herein to help the understanding of the components and thus they should not be considered as having specific meanings or roles. Accordingly, the terms "module" and "unit" may be used interchangeably.

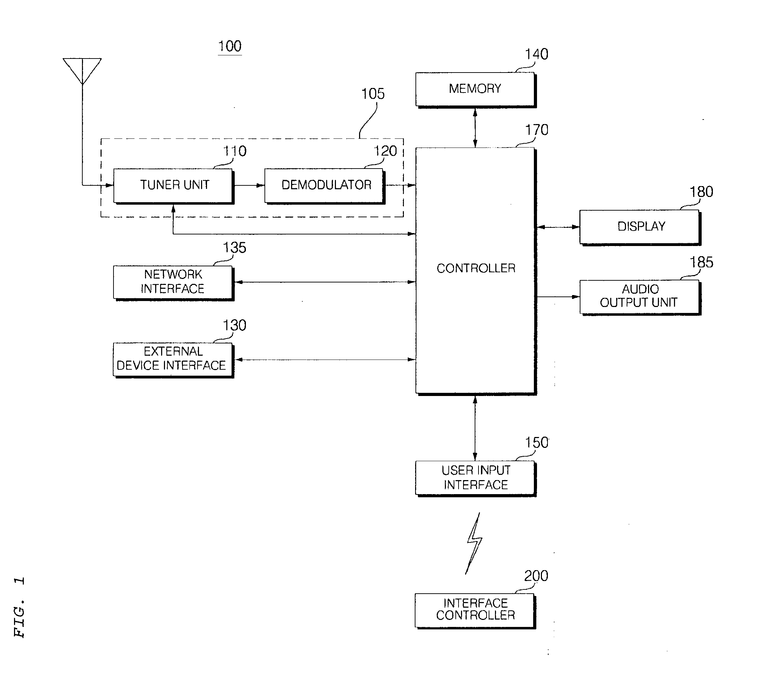

FIG. 1 is a block diagram showing the internal configuration of the image display apparatus according to an embodiment of the present invention.

Referring to FIG. 1, the image display apparatus 100 according to the embodiment of the present invention includes a broadcast reception unit 105, an external device interface 130, a memory 140, a user input interface 150, a sensor unit (not shown), a controller 170, a display 180 and an audio output unit 185.

The broadcast reception unit 105 may include a tuner unit 110, a demodulator 120 and a network interface 135. As needed, the broadcast reception unit 105 may include only the tuner unit 110 and the demodulator 120 or only the network interface 135.

The tuner unit 110 tunes to a Radio Frequency (RF) broadcast signal corresponding to a channel selected by a user from among RF broadcast signals received through an antenna or RF broadcast signals corresponding to all channels previously stored in the image display apparatus. The tuned RF broadcast is converted into an Intermediate Frequency (IF) signal or a baseband Audio/Video (AV) signal.

For example, the tuned RF broadcast signal is converted into a digital IF signal DIF if it is a digital broadcast signal and is converted into an analog baseband AV signal (Composite Video Banking Sync/Sound Intermediate Frequency (CVBS/SIF)) if it is an analog broadcast signal. That is, the tuner unit 110 may process a digital broadcast signal or an analog broadcast signal. The analog baseband AV signal (CVBS/SIF) output from the tuner unit 110 may be directly input to the controller 170.

The tuner unit 110 may be capable of receiving RF broadcast signals from an Advanced Television Systems Committee (ATSC) single-carrier system or from a Digital Video Broadcasting (DVB) multi-carrier system.

The tuner unit 110 may sequentially select a number of RF broadcast signals corresponding to all broadcast channels previously stored in the image display apparatus by a channel storage function from a plurality of RF signals received through the antenna and may convert the selected RF broadcast signals into IF signals or baseband A/V signals.

The tuner unit 110 may include a plurality of tuners in order to receive broadcast signals of a plurality of channels. Alternatively, the tuner unit may include a single tuner for simultaneously receiving broadcast signals of a plurality of channels.

The demodulator 120 receives the digital IF signal DIF from the tuner unit 110 and demodulates the digital IF signal DIF.

The demodulator 120 may perform demodulation and channel decoding, thereby obtaining a stream signal TS. The stream signal may be a signal in which a video signal, an audio signal and a data signal are multiplexed.

The stream signal output from the demodulator 120 may be input to the controller 170 and thus subjected to demultiplexing and A/V signal processing. The processed video and audio signals are output to the display 180 and the audio output unit 185, respectively.

The external device interface 130 may serve to transmit or receive data to or from an external device (not shown) connected thereto. For interfacing, the external device interface 130 may include an A/V Input/Output (I/O) unit (not shown) and/or a wireless communication module (not shown).

The external device interface 130 may be connected to an external device such as a Digital Versatile Disc (DVD) player, a Blu-ray player, a game console, a camera, a camcorder, or a computer (e.g., a laptop computer), wirelessly or by wire so as to perform an input/output operation with respect to the external device.

The A/V I/O unit externally receives video and audio signals from the external device. The wireless communication unit may perform short-range wireless communication with another electronic apparatus.

The network interface 135 serves as an interface between the image display apparatus 100 and a wired/wireless network such as the Internet. The network interface 135 may receive content or data provided by an Internet or content provider or a network operator over a network.

The network interface 135 performs data communication with an electronic apparatus located near the image display apparatus 100. At this time, the network interface 135 may receive apparatus information of another electronic apparatus or remote controllable channel information, frequency information or code information of another electronic apparatus.

The memory 140 may store various programs necessary for the controller 170 to process and control signals, and may also store processed video, audio and data signals.

The memory 140 may temporarily store a video, audio and/or data signal received from the external device interface 130. The memory 140 may store information about a predetermined broadcast channel by the channel storage function of a channel map.

In addition, the memory 140 may store infrared (IR) format key codes for controlling other electronic apparatuses as IR signals and store an IR format key database of a plurality of electronic apparatuses.

While the memory 140 is shown in FIG. 1 as being configured separately from the controller 170, to which the present invention is not limited, the memory 140 may be incorporated into the controller 170.

The user input interface 150 transmits a signal input by the user to the controller 170 or transmits a signal received from the controller 170 to the user.

For example, the user input interface 150 may transmit/receive various user input signals such as a power-on/off signal, a channel selection signal, and a screen setting signal from a remote controller 200, may provide the controller 170 with user input signals received from local keys (not shown), such as inputs of a power key, a channel key, and a volume key, and setting values, or provide the controller 170 with a user input signal received from a sensor unit (not shown) for sensing a user gesture, or transmit a signal received from the controller 170 to a sensor unit (not shown).

According to an embodiment of the present invention, the user input interface 150 may receive personal information from the remote controller 200. The user input interface 150 may further receive information about a web server accessed using the personal information in addition to the personal information.

For example, if a mobile terminal 300 and the remote controller 200 are within a predetermined distance of each other to perform a near field communication (NFC), the remote controller 200 may receive the personal information stored in the mobile terminal 300. The remote controller 200 may transmit the personal information to the image display apparatus 100 according to an IR method or an radio frequency (RF) method. At this time, the user input interface 150 sends the received personal information to the controller 170.

The personal information may include personal ID information, password information, personal email information, etc. of the mobile terminal 300. Alternatively, the personal information may include personal ID information, password information, personal email information, etc. of the image display apparatus 100. Alternatively, the personal information may include personal ID information, password information, etc. of various electronic apparatus, which may be commonly used, including the mobile terminal 300. Alternatively, the personal information may include personal ID information, password information, etc. of a predetermined web server previously stored in the mobile terminal 300. Alternatively, the personal information may include personal ID information, password information, etc. of a predetermined server web which may be used in the mobile terminal 300, the image display apparatus 100, etc. Alternatively, the personal information may include personal ID information, password information, etc. of a server connected to the image display apparatus 100.

That is, the personal information may be necessary to log in to an electronic apparatus or service.

The user input interface 150 may receive apparatus information of another electronic apparatus or remote controllable channel information, frequency information or code information of another electronic apparatus from an electronic apparatus located near the image display apparatus 100 through the remote controller 200.

The controller 170 may demultiplex the stream signal received from the tuner unit 110, the demodulator 120, or the external device interface 130 into a number of signals, process the demultiplexed signals into audio and video data, and output the audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

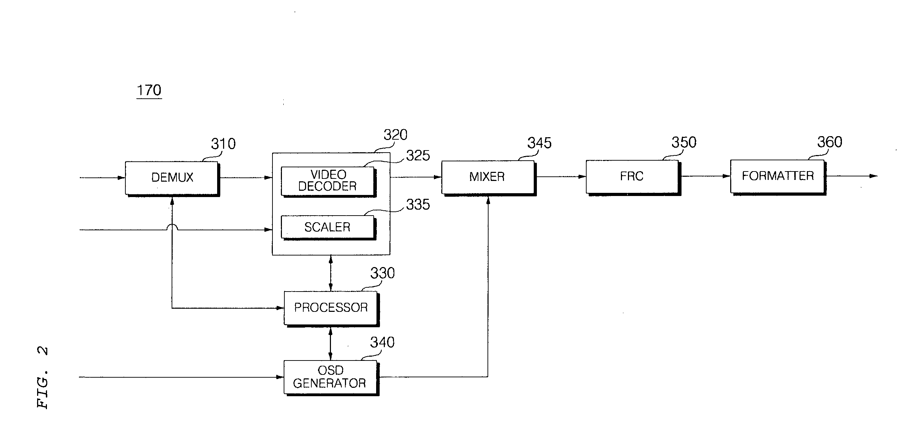

While not shown in FIG. 1, the controller 170 may include a DEMUX, a video processor, etc., which will be described in detail later with reference to FIG. 2.

The controller 170 may control the overall operation of the image display apparatus 100. For example, the controller 170 controls the tuner unit 110 to tune to an RF signal corresponding to a channel selected by the user or a previously stored channel.

The controller 170 may control the image display apparatus 100 by a user command input through the user input interface 150 or an internal program.

The controller 170 may control the display 180 to display images. The image displayed on the display 180 may be a Two-Dimensional (2D) or Three-Dimensional (3D) still or moving image.

The controller 170 may generate and display a predetermined object of an image displayed on the display 180 as a 3D object. For example, the object may be at least one of a screen of an accessed website (newspaper, magazine, etc.), an electronic program guide (EPG), various menus, a widget, an icon, a still image, a moving image, text, etc.

The controller 170 recognizes the position of the user based on an image captured by a camera unit (not shown). For example, a distance (z-axis coordinate) between the user and the image display apparatus 100 may be detected. An x-axis coordinate and a y-axis coordinate in the image display apparatus 100 corresponding to the position of the user may be detected.

According to an embodiment of the present invention, the controller 170 may control login based on the personal information received from the remote controller 200. At this time, login may be login of the image display apparatus 100, login of a server connected to the image display apparatus 100, or login of a predetermined web server to which a user subscribes using personal information thereof.

For example, if the user logs in to the image display apparatus 100 using personal ID information and password information received from the remote controller 200, the controller 170 may control the display 180 to display a personal screen of the user set according to a user account. If there is an image which is being viewed, the controller 170 may control the display 180 to display a personal setting screen along with the image which is being viewed. Alternatively, the controller 170 may switch the image which is being viewed to a personal setting screen.

As another example, if the user logs in to the server connected to the image display apparatus 100, the controller 170 may control the display 180 to display a server access screen received from the server. More specifically, the screen may be an app server screen. If there is an image which is being viewed, the controller 170 may control the display 180 to display a server access screen along with the image which is being viewed. Alternatively, the controller 170 may switch the image which is being viewed to a server access screen.

As another example, if the received personal information is personal information of another electronic apparatus and, more particularly, a predetermined web server accessed by the mobile terminal 300, the controller 170 may control the image display apparatus 100 to access the web server and control the display 180 to display a screen of the accessed web server. This web server may provide a social network service. If there is an image which is being viewed, the controller 170 may control the display 180 to display the screen of the accessed web server along with the image which is being viewed. Alternatively, the controller 170 may switch the image which is being viewed to the screen of the accessed web server.

The controller 170 may control a power supply (not shown) for supplying power to the image display apparatus 100 if the image display apparatus 100 is in an off state when the personal information is received. That is, if the user input interface 150 receives the personal information in a standby mode, the controller 170 may switch the standby mode to a wakeup mode and control the power supply to supply power to various modules or units.

The controller 170 may determine whether each electronic apparatus is connected according to the personal information from the remote controller 200 based on apparatus information of another electronic apparatus located near the image display apparatus 100 or remote controllable channel information, frequency information or code information of another electronic apparatus, which is received from the network interface 135 or the user input interface 150, and control the display 180 to display an object indicating that another electronic apparatus has been logged in.

Alternatively, the controller 170 may control transmission of apparatus information, channel information, frequency information and code information to the remote controller 200, based on apparatus information of another electronic apparatus located near the image display apparatus 100 or remote controllable channel information, frequency information or code information of another electronic apparatus.

Although not shown, a channel browsing processor for generating a thumbnail image corresponding to a channel signal or an external input signal may be further included. The channel browsing processor may receive the stream signal TS output from the demodulator 120 or the stream signal output from the external device interface 130, extract an image from the received stream signal, and generate a thumbnail image. The generated thumbnail image may be decoded into a stream form to be input to the controller 170 together with the decoded image. The controller 170 may display a thumbnail list including a plurality of thumbnail images on the display 180 using the input thumbnail image.

The thumbnail list may be displayed in a brief viewing method of displaying the thumbnail list in a part of an area in a state of displaying a predetermined image or may be displayed in a full viewing method of displaying the thumbnail list in a full area. The thumbnail images in the thumbnail list may be sequentially updated.

The display 180 converts the video signal, the data signal, the OSD signal and the control signal processed by the controller 170 or the video signal, the data signal and the control signal received by the external device interface 130 and generates a drive signal.

The display 180 may be a Plasma Display Panel (PDP), a Liquid Crystal Display (LCD), an Organic Light-Emitting Diode (OLED) display or a flexible display. In particular, the display 180 may be a 3D display.

If the display 180 is a touchscreen, the display 180 may function as not only an output device but also as an input device.

The audio output unit 185 receives the audio signal processed by the controller 170 and outputs the received audio signal as sound.

The camera unit (not shown) captures images of a user. The camera unit (not shown) may be implemented by one camera, but the present invention is not limited thereto. That is, the camera unit may be implemented by a plurality of cameras. The camera unit (not shown) may be embedded in the image display apparatus 100 at the upper side of the display 180 or may be separately provided. Image information captured by the camera unit (not shown) may be input to the controller 170.

The controller 170 may sense a user gesture from an image captured by the camera unit (not shown), a signal sensed by the sensor unit (not shown), or a combination of the captured image and the sensed signal.

The remote controller 200 transmits user input to the user input interface 150. For transmission of user input, the remote controller 200 may use various communication techniques such as Bluetooth, RF communication, IR communication, Ultra Wideband (UWB), ZigBee and near field communication (NFC).

In addition, the remote controller 200 may receive a video signal, an audio signal or a data signal from the user input interface 15. The remote controller 200 output the received signals visually or audibly based on the received video, audio or data signal.

The remote controller 200 according to the embodiment of the present invention may receive information by near field communication with a predetermined electronic apparatus. The information may include personal ID information and password information which may be used in the mobile terminal, the image display apparatus or the electronic apparatus, as described above.

The remote controller 200 may transmit the received personal information to the image display apparatus 100. As this time, an IR method or an RF method may be used as the communication method.

In the embodiment of the present invention, it is assumed that the remote controller 200 is a pointing device for displaying a pointer corresponding to user motion. That is, the remote controller 200 may transmit personal information to the image display apparatus 100 using an RF method.

The remote controller 200 may further receive information about a web server accessed using the personal information in addition to the personal information. For example, the remote controller 200 may receive web server information of a social network service which is being logged in to and accessed by the mobile terminal. Such web server information is also transmitted to the image display apparatus 100.

The remote controller 200 may receive apparatus information of another electronic apparatus or remote controllable channel information, frequency information or code information of another electronic apparatus from an electronic apparatus located near the image display apparatus 100. Based on the information about another electronic apparatus, a channel, frequency or code may be allocated to the electronic apparatus so as to perform remote control.

The above-described image display apparatus 100 may be a fixed or mobile digital broadcast receiver capable of receiving a digital broadcast.

The block diagram of the image display apparatus 100 illustrated in FIG. 1 is only exemplary. Depending upon the specifications of the image display apparatus 100 in actual implementation, the components of the image display apparatus 100 may be combined or omitted or new components may be added. That is, two or more components may be incorporated into one component or one component may be configured as separate components, as needed. In addition, the function of each block is described for the purpose of describing the embodiment of the present invention and thus specific operations or devices should not be construed as limiting the scope and spirit of the present invention.

Unlike FIG. 1, the image display apparatus 100 may not include the tuner unit 110 and the demodulator 120 shown in FIG. 1 and may receive broadcast content via the network interface 135 or the external device interface 135 and play the broadcast content back.

FIG. 2 is a block diagram showing the internal configuration of the controller illustrated in FIG. 1.

Referring to FIG. 2, the controller 170 according to the embodiment of the present invention may include a DEMUX 310, a video processor 320, a processor 330, an OSD generator 340, a mixer 345, a Frame Rate Converter (FRC) 350, and a formatter 360. The controller 170 may further include an audio processor (not shown) and a data processor (not shown).

The DEMUX 310 demultiplexes an input stream. For example, the DEMUX 310 may demultiplex an MPEG-2 TS into a video signal, an audio signal, and a data signal. The stream signal input to the DEMUX 310 may be received from the tuner unit 110, the demodulator 120 or the external device interface 135.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal can be displayed on the display 180.

The video decoder 325 may be provided with decoders that operate based on various standards.

The processor 330 may control the overall operation of the image display apparatus 100 or the controller 170. For example, the processor 330 controls the tuner unit 110 to tune to an RF signal corresponding to a channel selected by the user or a previously stored channel.

The processor 330 may control overall operation of the image display apparatus 100 or the controller 170. For example, the processor 330 may control the tuner unit 110 to tune to an RF broadcast corresponding to an RF signal corresponding to a channel selected by the user or a previously stored channel.

The processor 330 may control the image display apparatus 100 by a user command input through the user input interface 150 or an internal program.

The processor 330 may control data transmission of the network interface 135 or the external device interface 130.

The processor 330 may control the operation of the DEMUX 310, the video processor 320 and the OSD generator 340 of the controller 170.

The OSD generator 340 generates an OSD signal autonomously or according to user input. For example, the OSD generator 340 may generate signals by which a variety of information is displayed as graphics or text on the display 180, according to user input signals. The OSD signal may include various data such as a User Interface (UI), a variety of menus, widgets, icons, etc. Also, the OSD signal may include a 2D object and/or a 3D object.

The OSD generator 340 may generate a pointer which can be displayed on the display according to a pointing signal received from the remote controller 200. In particular, such a pointer may be generated by a pointing signal processor and the OSD generator 340 may include such a pointing signal processor (not shown). Alternatively, the pointing signal processor (not shown) may be provided separately from the OSD generator 340.

In association with the embodiment of the present invention, the OSD generator 340 may generate or configure a set personal screen if the user logs in to the image display apparatus 100. Alternatively, the OSD generator 340 may generate or configure at least a part of a server access screen so as to display a server access screen received from a server on the display 180 if the user logs in to the accessed server. Alternatively, the OSD generator 340 may generate or configure at least a part of a web server access screen based on information about a web server which is being accessed using personal information.

The mixer 345 may mix the decoded video signal processed by the video processor 320 with the OSD signal generated by the OSD generator 340. Each of the OSD signal and the decoded video signal may include at least one of a 2D signal and a 3D signal. The mixed video signal is provided to the FRC 350.

The FRC 350 may change the frame rate of an input image. The FRC 350 may maintain the frame rate of the input image without frame rate conversion.

The formatter 360 changes the format of the signal mixed by the mixer 345, that is, the OSD signal and decoded video signal, to be suitable for the display 180. For example, the formatter 360 may convert a received signal into an RGB data signal. The RGB signal may be output in the form of a Low Voltage Differential Signal (LVDS) or mini-LVDS.

The formatter 360 may separate a 2D video signal and a 3D video signal, for 3D video display. The formatter 360 may change the format of a 3D video signal or convert a 2D video signal into a 3D video signal.

The audio processor (not shown) of the controller 170 may process the demultiplexed audio signal. For audio signal processing, the audio processor may have various decoders.

The audio processor (not shown) of the controller 170 may also adjust the bass, treble or volume of the audio signal.

The data processor (not shown) of the controller 170 may process the demultiplexed data signal. For example, if the demultiplexed data signal was encoded, the data processor may decode the data signal. The encoded data signal may be Electronic Program Guide (EPG) information including broadcasting information such as the start time and end time of broadcast programs of each channel.

Although the formatter 360 performs 3D processing after the signals from the OSD generator 340 and the video processor 320 are mixed by the mixer 345 in FIG. 2, the present invention is not limited thereto and the mixer may be located at a next stage of the formatter.

The block diagram of the controller 170 shown in FIG. 2 is exemplary. The components of the block diagrams may be integrated or omitted, or a new component may be added according to the specifications of the controller 170.

In particular, the FRC 350 and the formatter 360 may be included separately from the controller 170.

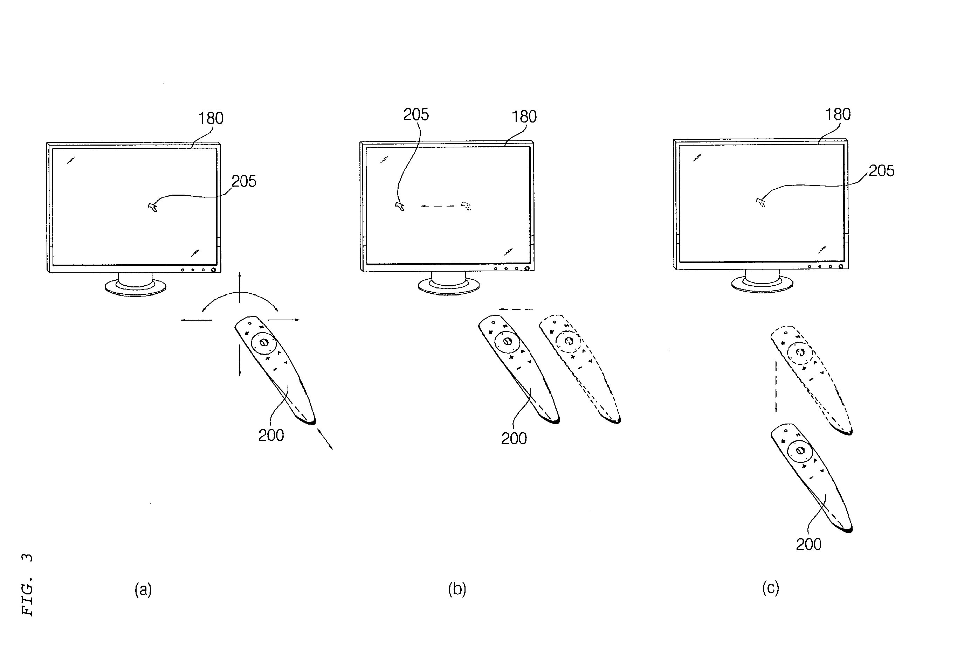

FIG. 3 is a diagram showing a method of controlling a remote controller of FIG. 1.

FIG. 3(a) illustrates a pointer 205 representing movement of the remote controller 200 displayed on the display 180.

The user may move or rotate the remote controller 200 up and down, side to side (FIG. 3(b)), and back and forth (FIG. 3(c)). The pointer 205 displayed on the display 180 of the image display apparatus corresponds to the movement of the remote controller 200. Since the pointer 205 moves in accordance with the movement of the remote controller 200 in a 3D space, the remote controller 200 may be referred to as a pointing device.

Referring to FIG. 3(b), if the user moves the remote controller 200 to the left, the pointer 205 moves to the left on the display 180 of the image display apparatus.

Information about the movement of the remote controller 200 sensed by the sensor of the remote controller 200 is transmitted to the image display apparatus. The image display apparatus may calculate the coordinates of the pointer 205 from the information about the movement of the remote controller 200. Then, the image display apparatus may display the pointer 205 at the calculated coordinates. Referring to FIG. 3(c), while pressing a predetermined button of the remote controller 200, the user moves the remote controller 200 away from the display 180. Then, a selection area corresponding to the pointer 205 may be zoomed in and enlarged on the display 180. On the contrary, if the user moves the remote controller 200 toward the display 180, the selection area corresponding to the pointer 205 is zoomed out and thus contracted on the display 180. Alternatively, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The speed and direction of the pointer 205 may correspond to the speed and direction of the remote controller 200.

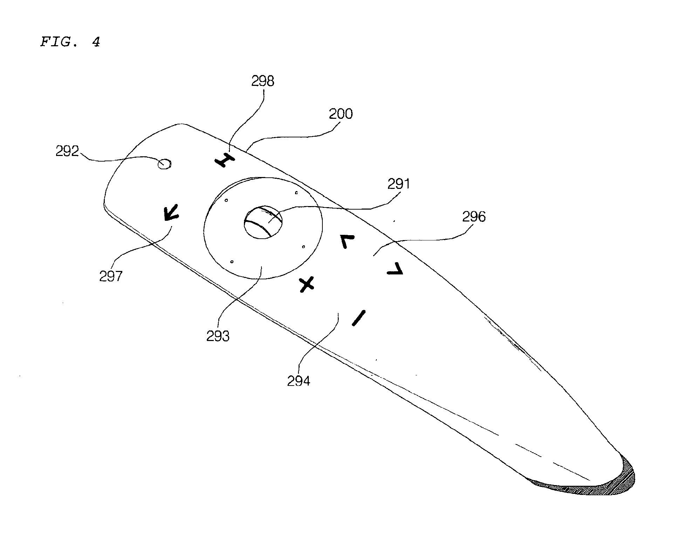

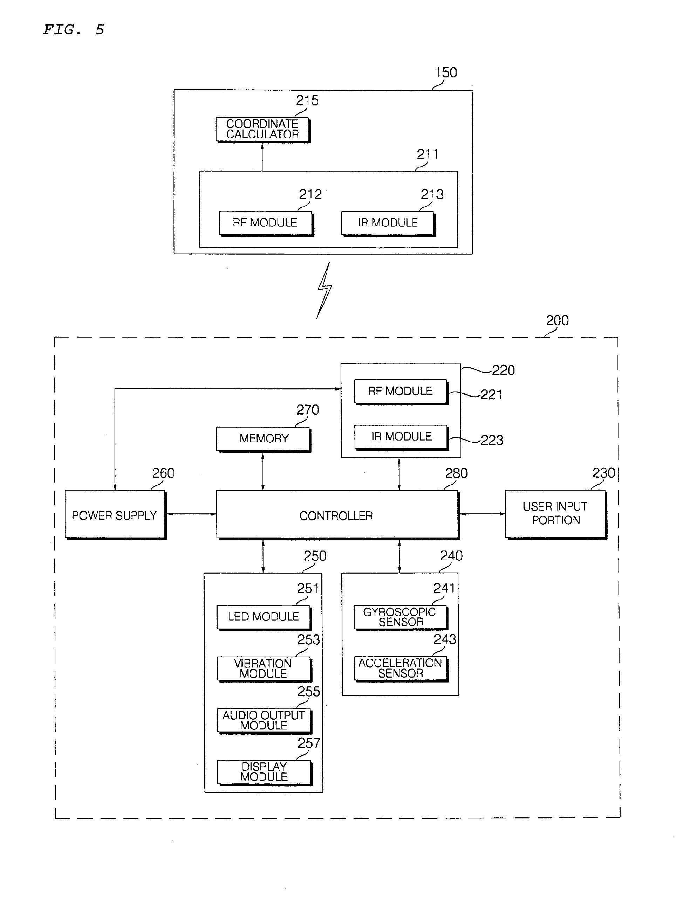

FIG. 4 is a perspective view of a remote controller according to an embodiment of the present invention and FIG. 5 is a block diagram showing the internal configuration of a remote controller according to an embodiment of the present invention.

Referring to FIG. 4, the pointing device 201 according to the embodiment of the present invention may include various input keys, input buttons, etc.

For example, the pointing device 201 may include an okay key 291, a menu key 292, a 4-direction key 293, a channel control key 294, and a volume control key 296.

For example, the okay key 291 may be used to select a menu or item, the menu key 292 may be used to display a predetermined menu, the 4-direction key 294 may be used to move a pointer or indicator up, down, left and right, the channel control key 294 may be used to move a channel up or down, and the volume control key 296 may be used for volume control.

The pointing device 201 may further include a back key 297 and a home key 298. For example, the back key 297 may be used to move a screen to a previous screen and the home key 298 may be used to move a screen to a home screen.

As shown in FIG. 4, the okay key 291 may further include a scroll function. For the scroll function, the okay key 291 may be implemented as a wheel key. That is, if the okay key 291 is pushed, the okay key 291 is used to select a menu or item and, if the okay key 291 is scrolled up or down, the okay key 291 is used to scroll a display screen or switch a list page.

More specifically, when the okay key 291 is scrolled for image searching in a state in which an image having a size greater than the size of the display is displayed on the display 180, an image region which is not currently displayed is displayed on the display. As another example, if the okay key 291 is scrolled in a state in which a list page is displayed on the display 180, a previous page or a next page of a current page may be displayed.

Such a scroll function may be included separately from the okay key 291.

The four-direction key 293 may include up, down, left and right keys in a circular shape as shown in Fig. 4. Touch input using the four-direction key 293 may be possible. For example, if a touch operation from the up key to the down key in the four-direction key 293 is performed, a set function may be input or performed according to the touch input.

Referring to FIG. 5, the remote controller 200 may include a radio transceiver 220, a user input portion 230, a sensor portion 240, an output portion 250, a power supply 260, a memory 270, and a controller 280.

The radio transceiver 220 transmits and receives signals to and from any one of the image display devices according to the embodiments of the present invention. Among the image display apparatuses according to the embodiments of the present invention, for example, one image display apparatus 100 will be described.

In accordance with the exemplary embodiment of the present invention, the remote controller 200 may be provided with an RF module 221 for transmitting and receiving signals to and from the image display device 100 according to an RF communication standard. Also, the remote controller 200 may include an IR module 223 for transmitting and receiving signals to and from the image display device 100 according to an IR communication standard.

In addition, the remote controller 200 may further include an NFC module (not shown) for NFC with an electronic apparatus.

The remote controller 200 may transmit information about movement of the remote controller 200 to the image display apparatus 100 via the RF module 221.

The remote controller 200 may receive the signal from the image display apparatus 100 via the RF module 221. The remote controller 200 may transmit commands associated with power on/off, channel switching, volume change, etc. to the image display device 100 through the IR module 223.

According to the present embodiment, the remote controller 200 may receive personal information by NFC with a predetermined electronic apparatus.

The remote controller 200 may transmit the received personal information to the image display apparatus 100. At this time, an IR method or an RF method may be used as a communication method.

The remote controller 200 may further receive information about a web server which is being accessed using the personal information, in addition to the personal information. For example, the remote controller 200 may receive web server information of a social network service which is being logged in and accessed by the mobile terminal 300. Such web server information may also be transmitted to the image display apparatus 100.

The remote controller 200 may receive apparatus information of another electronic apparatus or remote controllable channel information, frequency information or code information of another electronic apparatus. Based on the information about another electronic apparatus, a channel, frequency or code may be allocated to the electronic apparatus so as to perform remote control.

The user input portion 230 may include a keypad, a key (button), a touch pad or a touchscreen. The user may enter a command related to the image display device 100 to the remote controller 200 by manipulating the user input portion 230. If the user input portion 230 includes hard keys, the user may enter commands related to the image display device 100 to the remote controller 200 by pushing the hard keys. If the user input portion 230 is provided with a touchscreen, the user may enter commands related to the image display device 100 to the remote controller 200 by touching soft keys on the touchscreen. Also, the user input portion 230 may have a variety of input means which may be manipulated by the user, such as a scroll key, a jog key, etc., to which the present invention is not limited.

The sensor portion 240 may include a gyroscopic sensor 241 or an acceleration sensor 243. The gyroscopic sensor 241 may sense information about movement of the remote controller 200.

For example, the gyroscopic sensor 241 may sense information about movement of the remote controller 200 along x, y and z axes. The acceleration sensor 243 may sense information about the velocity of the remote controller 200. The sensor portion 240 may further include a distance measurement sensor for sensing a distance from the display 180. Alternatively, the sensor portion 240 may include a geomagnetic sensor for detecting flow of a magnetic field generated by earth and detecting a compass bearing to detect change in the compass bearing.

The output portion 250 may output a video or audio signal corresponding to manipulation of the user input portion 230 or a signal transmitted by the image display device 100. The user may be aware from the output portion 250 whether the user input portion 230 has been manipulated or the image display device 100 has been controlled.

For example, the output portion 250 may include a Light Emitting Diode (LED) module 251 for illuminating when the user input portion 230 has been manipulated or a signal is transmitted to or received from the image display device 100 through the radio transceiver 220, a vibration module 253 for generating vibrations, an audio output module 255 for outputting audio, or a display module 257 for outputting video.

The power supply 260 supplies power to the remote controller 200. When the remote controller 200 is kept stationary for a predetermined time, the power supply 260 blocks power from the remote controller 200, thereby preventing waste of power. When a predetermined key of the remote controller 200 is manipulated, the power supply 260 may resume power supply.

The memory 270 may store a plurality of types of programs required for control or operation of the remote controller 200, or application data. When the remote controller 200 transmits and receives signals to and from the image display device 100 wirelessly through the RF module 221, the remote controller 200 and the image display device 100 perform signal transmission and reception in a predetermined frequency band. The controller 280 of the remote controller 200 may store information about the frequency band in which to wirelessly transmit and receive signals to and from the image display device 100 paired with the remote controller 200 in the memory 270 and refer to the information.

The memory 270 may store IR format key codes for controlling other electronic apparatuses as IR signals and store an IR format key database of a plurality of electronic apparatuses.

The controller 280 provides overall control to the remote controller 200. The controller 280 may transmit a signal corresponding to predetermined key manipulation on the user input portion 230 or a signal corresponding to an movement of the remote controller 200 sensed by the sensor portion 240 to the image display device 100 through the radio transceiver 220.

The controller 280 may control transmission of the received personal information to the image display apparatus 100 through the radio transceiver 220 by NFC with an electronic apparatus. In particular, if predetermined key input of the user input portion 230 is performed, the controller 280 may control transmission of the received personal information to the image display apparatus 100 through the radio transceiver 220.

In addition, the controller 280 may control transmission of the received personal information to an electronic apparatus other than the image display apparatus 100. At this time, different channels, frequencies or codes may be used with respect to electronic apparatuses. Such channels, frequencies or codes may be based on apparatus information or remote controllable channel information, frequency information or code information previously received from another electronic apparatus.

The user input interface 150 of the image display device 100 may have a radio transceiver 211 for wirelessly transmitting and receiving signals to and from the remote controller 200, and a coordinate calculator 215 for calculating the coordinates of the pointer corresponding to an operation of the remote controller 200.

The user input interface 150 may transmit and receive signals wirelessly to and from the remote controller 200 through an RF module 212. The user input interface 150 may also receive a signal from the remote controller 200 through an IR module 213 based on the IR communication standard.

The coordinate calculator 215 may calculate the coordinates (x, y) of the pointer to be displayed on the display 180 by correcting handshaking or errors from a signal corresponding to an operation of the remote controller 200 received through the radio transceiver 211.

A signal transmitted from the remote controller 200 to the image display apparatus 100 through the user input interface 150 is provided to the controller 180 of the image display device 100. The controller 180 may identify information about an operation of the remote controller 200 or key manipulation on the remote controller 200 from the signal received from the remote controller 200 and control the image display device 100 according to the information.

In another example, the remote controller 200 may calculate the coordinates of the pointer corresponding to the operation of the remote controller and output the coordinates to the user input interface 150 of the image display device 100. The user input interface 150 of the image display device 100 may then transmit information about the received coordinates to the controller 180 without correcting handshaking or errors.

As another example, the coordinate calculator 215 may not be included in the user input interface 150 but may be included in the controller 170.

As smart TVs having various functions have come into widespread use, there is a need for development of a remote controller which is conveniently used by a user, for example, a pointing device.

The image display apparatus has three characteristics including large screen, passive viewer and a GUI more simplified than a personal computer (PC), as compared to another electronic apparatus. Accordingly, touch, mouse, optical track pad (OTP) methods applied to the existing PC and phone may not be applied without change and may be required to be improved to suit TV characteristics.

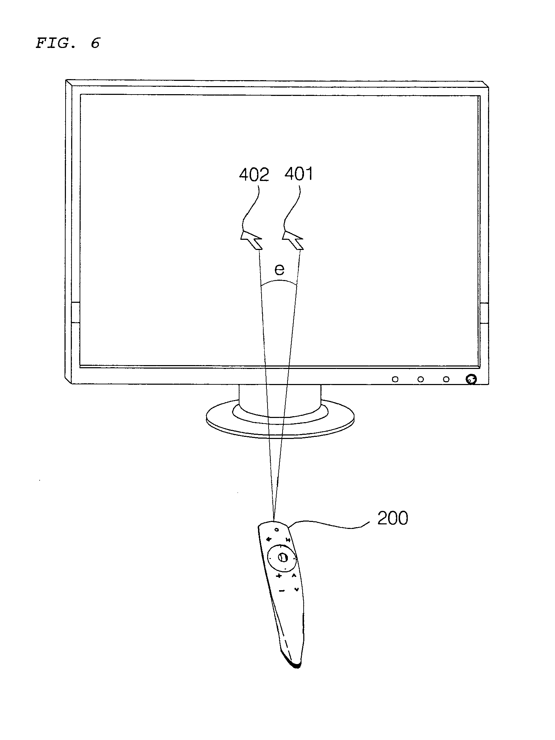

FIG. 6 is a diagram showing an example of movement of a remote controller.

As smart TVs have come into widespread use, the number of operations which should be controlled by a user has been increased and thus complexity of a UI has been increased. In order to efficiently use a smart TV, a remote controller such as a pointing device is used. Since pointing devices generally have a rod shape, the pointing devices have directivity with respect to an object to be manipulated.

The pointing device generates 2D coordinates on a planar display. If a relative coordinate system using a gyroscopic sensor is used, a cursor movement region is restricted to a screen size.

In this case, when a directing point of the pointing device moves off of a screen and then returns to the screen, the location of the cursor and the directing point of the apparatus do not match and thus intuition deterioration or wrist bending may occur.

As shown in FIG. 6, if a pointing device is used for a predetermined period of time, error e may be generated between the location of the pointing device 200 of the current state or the location 402 of a pointer which is desired to be displayed by the user and the location 401 of the pointer on a display screen.

The image display apparatus 100 may calculate vertical and horizontal movement on the display screen using a signal received from the pointing device and calculate new coordinates of the pointer by adding the calculated movement to the previous pointer location. The pointer is displayed on the display screen corresponding to the calculated coordinates.

The error is generated by sensor error of sensors such as a gyroscopic sensor, an acceleration sensor, etc., integration error due to sensor error, change in sensor output values due to the state of the pointing device when the pointing device moves by the same distance, a movement method and speed, etc. Since the error is accumulated, the error e may be generated between the location of the pointing device 200 or the pointing region and the location of the displayed pointer 401 after a predetermined time.

If the pointing device moves in and off of the display screen at the boundaries of the display screen, that is, the edge of the screen of the image display apparatus, the error may be increased. The pointer may move in the display screen and may not move off of the screen.

If the pointer is located at the end of the screen of the image display apparatus, the pointer no longer moves even when the pointing device further moves to the outside of the screen of the image display apparatus. Accordingly, error may be generated between the location of the pointer and the movement of the pointing device. In addition, in this state, if the pointing device moves to the center of the screen, the pointer also moves but the generated location error are maintained. Accordingly, if the pointing device repeatedly moves in and off of the display screen at the boundaries of the display screen, the location error may be accumulated.

Therefore, an object of the present invention is to intuitively provide information about manipulation of a pointing device and a directing point to a user when using the pointing device so as to increase movement accuracy and efficiency of the pointing device and reduce wrist bending generated when using the pointing device.

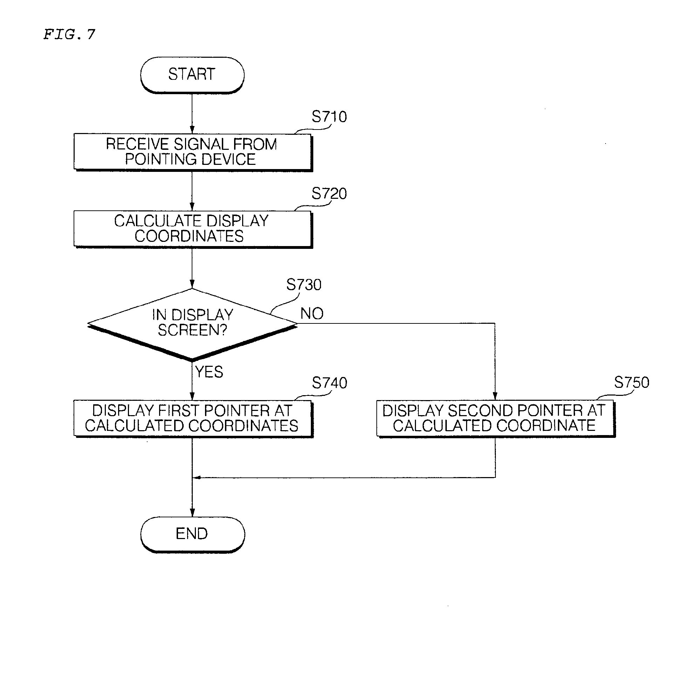

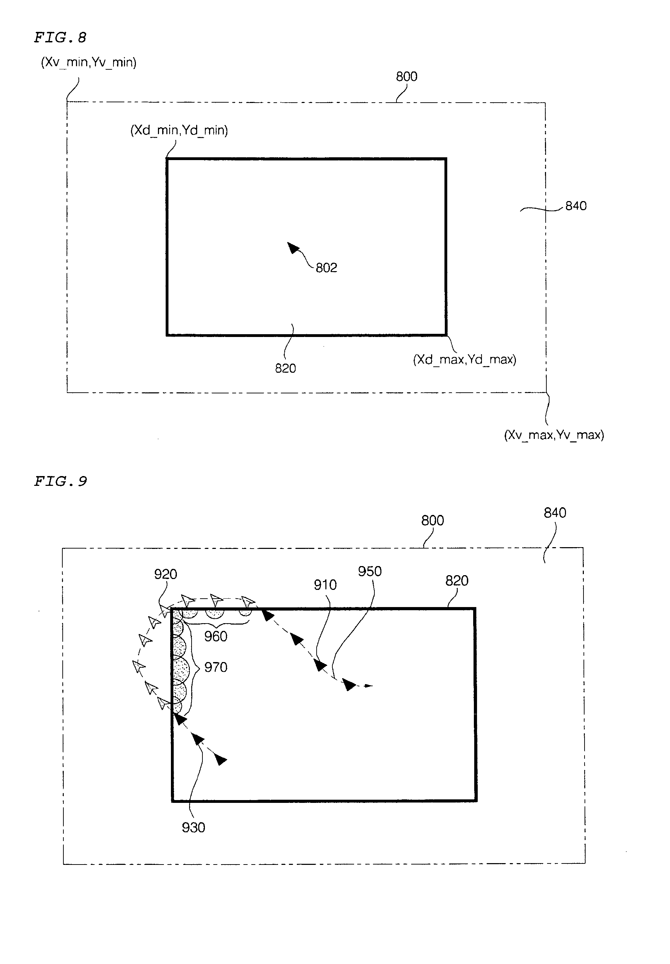

FIG. 7 is a flowchart illustrating a method for operating an image display apparatus according to an embodiment of the present invention, and FIGS. 8 to 13 are views referred to for describing various examples of the method for operating the image display apparatus of FIG. 7.

Referring to the figures, first, the image display apparatus 100 receives a signal from the remote controller 200 via the interface 150 (S710).

As to the coordinates of the remote controller, an absolute coordinate method or a relative coordinate method may be used. In the absolute coordinate method, the pointer is displayed at a location actually pointed to by the pointing device. In the relative coordinate method, the pointer moves by a movement amount of the pointing device from a location where the pointing device is stopped, regardless of a location actually pointed to by the pointing device, and the pointer may move according to change calculated by a 3-axis acceleration sensor included in the pointing device. Although the present invention is applicable to the absolute coordinate method or the relative coordinate method, it is possible to further improve efficiency of the relative coordinate method according to the movement change of the pointing device.

Meanwhile, the received signal may be movement coordinate information of the remote controller or change information of movement coordinates of the remote controller.

Thereafter, the interface 150, that is, the coordinate calculator 215 calculates display coordinates for pointer display based on the signal received from the pointing device (S720). As described with reference to FIG. 5, the coordinate calculator 215 for calculating the coordinates may be included in the controller 170 according to embodiments.

The controller 170 determines in which region the calculated coordinates are included (S730) and controls the pointer to be displayed at different locations.

The controller 170 displays a first pointer at the calculated coordinates (S740) if the calculated coordinates are within the boundaries of the display screen and controls a second pointer to be displayed at the boundaries of the display screen (S750) if the calculated coordinates moves off of the boundaries of the display screen.

That is, if the calculated coordinates are within the boundaries of the display screen, the movement of the remote controller in the display screen 820 may barely cause error and thus the pointer is displayed in a corresponding region of the display screen according to the calculated coordinates.

Otherwise, the pointer may be displayed at a predetermined location different from the calculated coordinates, for example, at a region adjacent to the edge of the display screen.

In step S750 of displaying the second pointer, the controller 170 may control the second pointer to be displayed in a boundary region of the display screen closest to the calculated coordinates.

In step S750 of displaying the second pointer, the controller 170 may display the first pointer and the second pointer to have different shapes. Therefore, the user can be intuitively aware that the directing point of the remote controller and the calculated coordinates are different from the location of the currently displayed pointer.

The controller 170 may control the second pointer to be displayed when the calculated coordinates move off of the display screen and are within a virtual extension region larger than the boundary of the display screen.

According to the present invention, by setting a virtual extension area 800 in which coordinate change may be internally handled as the pointer moves off of the screen, coordinate change may continue to be applied even when the pointer moves off of the boundaries of the screen and then moves into the screen. Accordingly, it is possible to prevent pointer deviation.

If coordinate change up to infinity is allowed to be handled without setting the virtual extension region 800, the difference between the directing point of the pointing device 200 of the user and the location of the displayed pointer is extremely increased and thus a burden is imposed on the processing speed and capacity of the processor.

Accordingly, in the embodiment of the present invention, it is possible to efficiently process coordinate values by setting a finite virtual extension region 800.

More preferably, the virtual extension region 800 may be generally set to a size including a distance by which the remote controller frequently moves when pointing a UI element located at the edge of the screen.

The controller 170 determines whether the calculated coordinates are within the display screen as a first condition to control the display of the pointer and further determines whether the calculated coordinates are within the virtual extension region as a second condition to control the display of the pointer.

The virtual extension region 800 may be set to be larger than a display screen 820 and include the display screen as shown in FIG. 8. FIG. 8 shows maximum values and minimum values of the virtual extension region 800 and the display screen 820.

More preferably, the centers and the aspect ratios of the virtual extension region 800 and the display region 820 are identical. That is, the virtual extension region 800 is larger than the display screen 820 and the virtual extension region 800 is preferably enlarged in proportion to the display screen 820.

The controller 170 provides different pointer feedbacks to the screen when the pointer moves to the virtual extension region 800 and may differently control the size, shape, contrast, color, strength of the feedback in proportion to the distance from the screen. Accordingly, the user can confirm the approximate location of the directing point of the remote controller and can more easily move the pointer to a desired location.

That is, the controller 170 provides feedback to the user by differently displaying the display state of the pointer according to the distance from the boundary of the screen when the pointer moves off of the screen. The controller 170 may control the size, length or transparency of the feedback to be changed according to the distance.

FIG. 9 shows an example in which a user moves a pointer in a display screen, moves the pointer off of the display screen, and moves the pointer onto the display screen.

Referring to FIG. 9, a trajectory 950 of a directing point of the remote controller actually moved by the user and display locations 910, 960, 970 and 930 of the pointer are different, that is, the directing point 920 and the display locations 960 and 970 of the pointer are different because the directing point of the remote controller moves off of the display screen 840.

The controller 170 may calculate display coordinates based on the signal received from the remote controller and display a first pointer 910 at the location corresponding to the calculated coordinates if the calculated coordinates are within the display screen 840.

The controller 170 may display second pointers 960 and 970 different from the first pointer 910 in a region of the display screen 820 closest to the calculated coordinates, if the calculated coordinates are between the boundaries of the virtual extension region 800 and the display screen 820, that is, in the remaining region 840 of the virtual extension region excluding the display screen. Accordingly, although virtual pointer coordinates may move in the virtual extension region 800, the coordinates of the displayed pointer may be displayed along the boundary region of the display screen 820.

If the coordinates calculated according to movement of the pointing device are movement coordinates and the coordinates of the pointer displayed on the display screen 820 are display coordinates, the movement coordinates of the pointer are continuously changed in the virtual extension region 800. The display coordinates are coordinates of an actually displayed pointer icon and are equal to the movement coordinates in the display screen, but are restricted in each direction (X, Y) outside the display screen. That is, if a virtual pointer moves off of the left edge of the display screen, the X coordinate of the display coordinates is fixed to Xₘᵢₙ which is the X coordinate of the edge of the display screen and the pointer is displayed as being on the left edge of the display screen. This is equally applicable to up, down and right edges.

In step S750 of displaying the second pointer, the controller 170 may control the second pointer to be displayed such that at least one of the size, shape, contrast, or color of the second pointer is changed according to the distance between the calculated display coordinates and the display screen.

In this case, the controller 170 may increase the size of the second pointer if the distance between the calculated display coordinates and the display screen is increased.

For example, the second pointers 960 and 970 shown in FIG. 9 have a semicircular shape different from that of the first pointer 910 and the size of the semicircle is increased as the distance is increased.

If the pointing device 200 moves such that the calculated coordinates are within the display screen again, a third pointer 930 having a shape different from that of the second pointers 960 and 970 may be displayed at the calculated coordinates. The third pointer 930 may have the same shape as the first pointer 910.

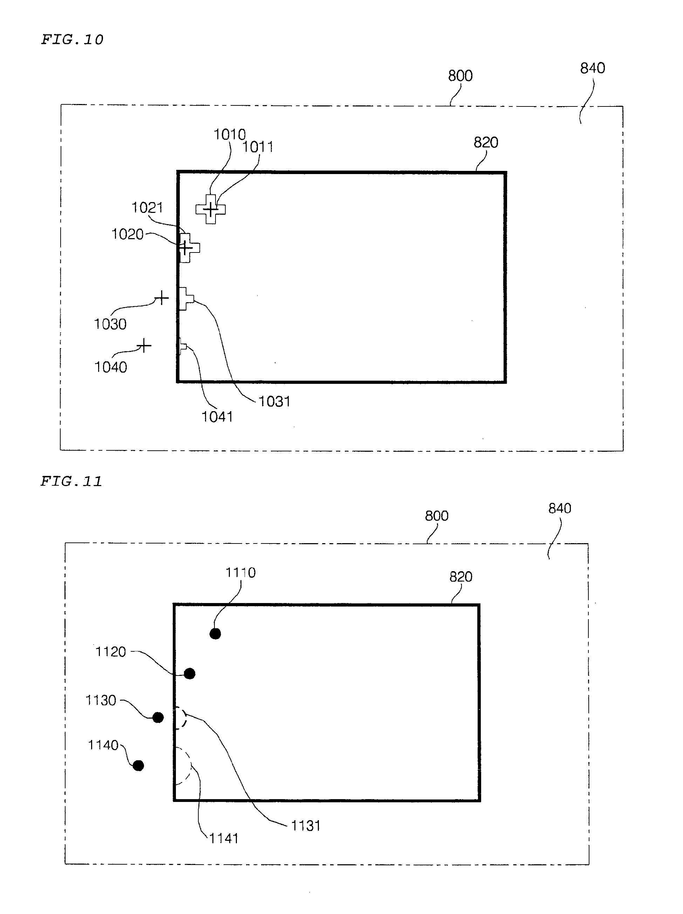

FIGs. 10 and 11 show other examples of the second pointer displayed when the calculated display coordinates move off of the boundaries of the display screen.

Referring to FIG. 10, small crosses 1010, 1020, 1030 and 1041 indicate the calculated displayed coordinates. The first pointers 1010 and 1021 displayed when the calculated display coordinates are within the display screen may have the same shape and size. However, if a space for displaying the pointer at the calculated coordinates is not sufficient, only a part of a shape 1021 may be displayed.

FIG. 10 shows an example in which the size of the second pointer decreases in proportion to the distance of the calculated display coordinates from the display screen. Referring to FIG. 10, the size of the pointer 1031 corresponding to the display coordinates 1030 which are relatively close to the display screen may be greater than that of the pointer 1041 corresponding to the display coordinates 1040 which are relatively far from the display screen.

If the calculated display coordinates of the small crosses 1010, 1020, 1030 and 1041 are included in the display screen, as shown in FIG. 10, the small crosses may or may not be displayed along with the first pointers 1011 and 1021.

The pointer 1041 corresponding to the display coordinates 1040 which are relatively far from the display screen may be displayed such that the shape thereof is different from that of the second pointer 1031, unlike the example of FIG. 10.

FIG. 11 shows first pointers 1110 and 1120 having a circular shape and second pointers 1131 and 1141 having a semicircular shape.

The second pointers 1131 and 1141 may be displayed with different sizes according to the distance between the calculated display coordinates and the display screen. The size of the pointer 1131 corresponding to the display coordinates 1130 relatively close to the display screen may be less than that of the pointer 1141 corresponding to the display coordinates 1140 relatively distant from the display screen.

Transparency of the second pointers 1131 and 1141 may be changed in proportion to the distance between the calculated display coordinates and the display screen. In FIG. 11, for convenience, transparency change is represented by the thickness of a dotted line.

If the calculated display coordinates are located outside of the virtual extension region 800 larger than the boundary of the display screen, the controller 170 may control an alarm message to be displayed or control a pointer to be displayed at a predetermined location.

The virtual extension region 800 is larger than the display screen 820 as described above. Accordingly, the pointer may not be displayed outside the display screen, but the pointing device 200 may infinitely move if the pointing device 200 moves outside of the virtual extension region 800. Accordingly, association between movement of the pointer and operation of the pointing device 200 is reduced. Thus, accurate operation may not be performed.

For example, if the user operates the pointing device 200 at the same point, as the location pointed to by the pointing device 200 is distant from the center, the image display apparatus may respond to a small operation as a large operation. Accordingly, in this case, an alarm message may be displayed such that the user becomes aware of the current state and the pointer may be displayed at a predetermined location, that is, at the center of the display screen.

Thereafter, the image display apparatus may receive the signal from the pointing device and perform operation corresponding thereto. Since the pointer is displayed at the center of the display screen, the user may easily confirm the location of the pointer. Since the pointing device may be rearranged at the center of the display screen, it is possible to correct location error.

The controller may reset the calculated coordinates to the coordinates corresponding to the center of the display screen and display the pointer at the center of the display screen based on the reset coordinates. In addition to the display location of the pointer, even in the movement of the pointer in the image display apparatus, a reference coordinate value may be reset to be used to calculate coordinates.

Meanwhile, the image display apparatus and the remote controller according to the embodiment of the present invention may support an IR blaster function.

The IR blaster function refers to a function for receiving a control signal of a predetermined format and transmitting an IR signal suitable for control of a peripheral apparatus to a light receiving unit of the peripheral apparatus.

Such an IR blaster function may be performed by the image display apparatus.

For example, a universal IR microcomputer for controlling another electronic apparatus is included in the image display apparatus 100. If the controller sends input information to the universal IR microcomputer, an external cable IR transmitter is attached to an IR light receiving unit of an external apparatus to control the external apparatus. In this case, the universal IR microcomputer may be incorporated into the controller.

In this case, in addition to the cable for transmitting and receiving a variety of data, a separate IR blaster cable is required.

In addition, this function is restricted to a close external apparatus and the number of controllable external apparatuses is restricted according to the number of cable IR transmitters.

A method of controlling several peripheral apparatuses by readying several IRs in various directions via an IR blaster box provided outside of the image display apparatus is possible.

However, even in this case, only restricted control is possible according to the direction of the wireless IR transmitter and an external apparatus located outside of an IR reception range cannot be controlled.

Accordingly, the present invention provides an operating method which is advantageous in terms of spatial restriction and support of external apparatuses when an IR blaster function is performed with respect to an external apparatus.

The method for operating the image display apparatus according to an embodiment of the present invention further includes a step of transmitting apparatus information of an electronic apparatus or IR format key information corresponding to the calculated display coordinates to the remote controller if the calculated display coordinates move off of the boundaries of the display screen.

That is, the controller 170 may switch to a mode supporting an IR blaster function for controlling an external electronic apparatus through the remote controller 200 if the calculated display coordinates move off of the boundaries of the display screen.

In addition, the controller 170 may control transmission of apparatus information or IR format key information of an electronic apparatus corresponding to the calculated display coordinates to the remote controller.

For example, if the calculated coordinates are located at the right side of the image display apparatus 100, the controller 10 may control transmission of information about an electronic apparatus set to correspond to the right side.

Here, the information transmitted from the controller 170 to the remote controller 200 may be changed according to embodiments.

For example, if the memory 140 stores IR format key information of the selected electronic apparatus in advance, the IR format key information of the electronic apparatus corresponding to the calculated coordinates may be transmitted to the remote controller 200.

Alternatively, if the remote controller receives a command input by a user and requests IR format key information corresponding to the received command from the image display apparatus, the image display apparatus may transmit the IR format key information corresponding to the received command to the remote controller.

That is, all information of an IR format key database is not transmitted at once, but requested information may be transmitted.

The request of the IR format key information corresponding to the received command may be delivery of the received command to the image display apparatus.

The memory 140 may store an IR format key database including the IR format key information of the selected electronic apparatus.

In addition, if the IR format key database is stored, the image display apparatus 100 may update the IR format key database periodically or on a command.

Alternatively, if the IR format key information of the selected electronic apparatus is not stored, the image display apparatus 100 may automatically download the IR format key information over a network and transmit the IR format key information.

If the remote controller 200 stores the IR format key information, the image display apparatus 100 transmits the apparatus information of the selected electronic apparatus such that the remote controller 200 confirms the electronic apparatus selected by the user.

The interface 150 includes the RF module 212 and the information may be transmitted using an RF communication method.

Since the RF communication method is not restricted as to distance and directivity as compared to the IR communication method, if the IR format key information of the selected electronic apparatus or the apparatus information of the selected electronic apparatus is transmitted to the remote controller 200 using the RF communication method, the user can more conveniently control another electronic apparatus.

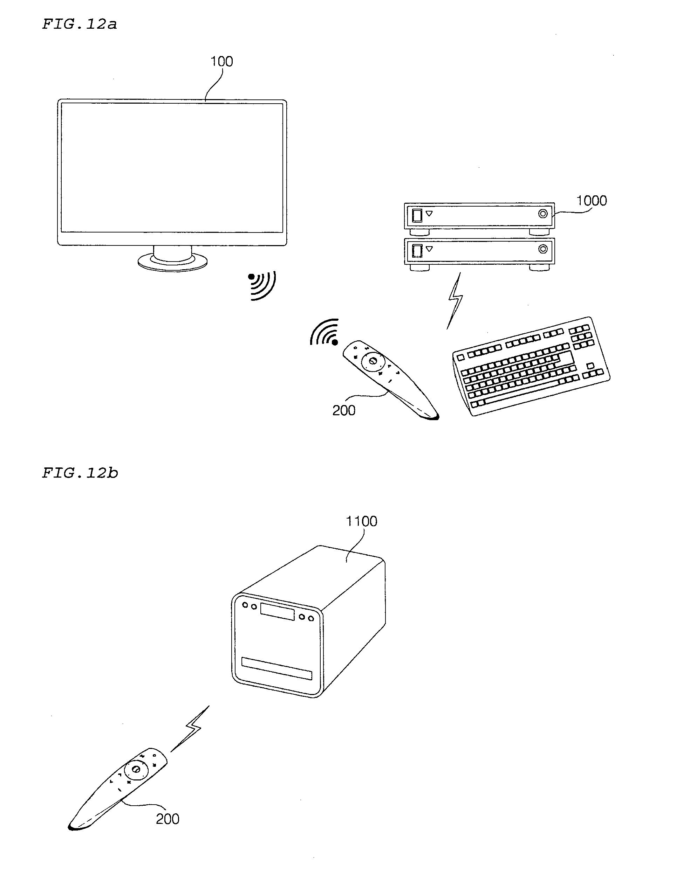

The present invention does not limit the shape of the remote controller. For example, as shown in FIG. 12A, a remote controller 202 such as a keyboard may be used.

The remote controller 200 may include a first module for receiving the above information from the image display apparatus 100. In this case, the first module may be the RF module 221 and the information may be received by the RF module 221 using the RF communication method.

Since the RF communication method is not restricted in distance and directivity as compared to the IR communication method. Accordingly, since the user may receive data at a farther distance as compared to the IR communication method, the user may move to the vicinity of an electronic apparatus to be controlled and control the electronic apparatus using the remote controller.

That is, in addition to the case in which the image display apparatus 100 and another electronic apparatus 1000 are adjacent to each other as shown in FIG. 12a, the remote controller moves to the vicinity of an electronic apparatus 110 which is not adjacent to the image display apparatus 100 to control the electronic apparatus 100 after information is received, as shown in FIG. 12B.

The controller 280 may control an IR signal to be generated or changed to suit the IR format key of the electronic apparatus based on the received information and the received command.

If the remote controller 200 receives the IR format key information of the selected electronic apparatus, the controller 280 may generate the IR information based on the information corresponding to the command of the received IR format key information of the electronic apparatus.

That is, if a user command is received after information necessary to control the electronic apparatus is received from the image display apparatus 100, a signal mapped to the information may be extracted so as to generate a signal corresponding to the command.

Alternatively, the remote controller 200 may include a memory 270 for storing the IR format key database including the IR format key information of the electronic apparatus corresponding to the received apparatus information.

If the memory 270 of the remote controller stores the IR format key database, only information indicating which electronic apparatus is selected by the user may be received from the image display apparatus 100.

In this case, the controller 280 may generate the IR signal based on information corresponding to the apparatus information of the previously stored IR format key database.

Alternatively, a step of receiving a command input by the user and a step of requesting IR format key information corresponding to the received command from the image display apparatus may be further included.

That is, the remote controller receives the command input by the user and requests the IR format key information corresponding to the received command from the image display apparatus and the image display apparatus may transmit the IR format key information corresponding to the received command.

Accordingly, the remote controller may receive and use the IR format key corresponding to the command request of the user as necessary.

That is, all information of the IR format key database is not transmitted at once but information corresponding to a command may be transmitted.

Even when all IR format key information is received or even when there is no signal corresponding to a command input by the user, it is possible to request necessary information from the image display apparatus.

Even when the IR format key information is received from the image display apparatus 100, the received information may be temporarily stored in the memory 270.

Thereafter, the controller 280 may control an IR signal generated by a second module different from the first module to be transmitted to the electronic apparatus.

According to the present invention, even when a separate IR transmitter for controlling an external electronic apparatus is not included in an image display apparatus, it is possible to control the external electronic apparatus.

In addition, since an external apparatus can be freely controlled without spatial restriction of IR signal transmission and reception, a user can easily control an image display apparatus and an external apparatus. Accordingly, since another electronic apparatus can be easily controlled, it is possible to improve user convenience.

According to the present invention, it is possible to easily control many external electronic apparatuses using one remote controller. In particular, since the electronic apparatus can be controlled using the remote controller, the external electronic apparatus can be freely used without location or spatial restriction, user convenience is excellent.

The second pointer may be displayed as a graphic object such as an icon corresponding to the electronic apparatus. Accordingly, the user can intuitively recognize the electronic apparatus which may be controlled by the user.

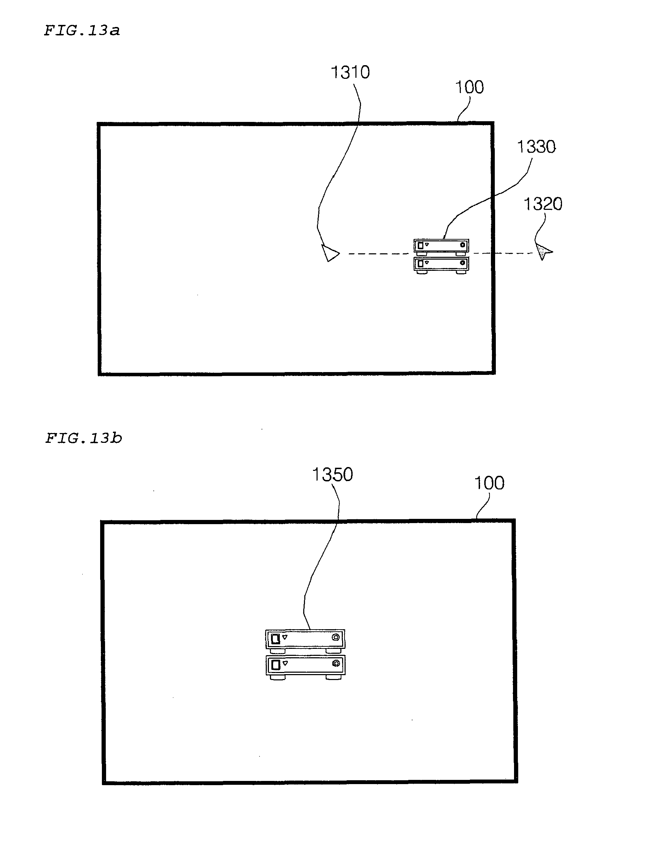

As shown in FIG. 13A, if the pointed point 1320 of the remote controller 200 moves off of the display screen to the right, a pointer 1310 may be displayed in the form of an icon intuitively representing an electronic apparatus 100 in correspondence with the right.

Alternatively, as shown in FIG. 13B, an icon 1350 intuitively representing the electronic apparatus 1000 set in a predetermined region of the display 180 or detailed information may be displayed.

According to an embodiment of the present invention, it is possible to reduce deviation between a directing point of an apparatus and a pointer location by extending a pointer movement region restricted to a screen size to a virtual region.

In general, since a deviation between a pointer and a directing point of a pointing device is frequently generated when manipulating a UI element located at an edge of a screen, a virtual pointer movement region larger than the screen can be set.

According to an embodiment of the present invention, in particular, by extending a pointer movement region upon a pointing operation using a relative coordinate method, it is possible to reduce the frequency of cursor deviation occurring in the edge of the screen and to reduce wrist bending.

Meanwhile, the present invention is not limited to the shape shown as the example of the pointer and various cursor, images or icons may be displayed.

According to the present invention, it is possible to correct location error generated by movement of a remote controller in the vicinity of a boundary of a display screen, sensor error or movement recognition error and to increase user convenience and reliability of a pointing device.

Therefore, it is possible to increase movement accuracy and efficiency of the remote controller and increase user convenience.

The image display apparatus and the method for operating the same according to the foregoing embodiments are not restricted to the embodiments set forth herein. Therefore, variations and combinations of the exemplary embodiments set forth herein may fall within the scope of the present invention.

The method for operating an image display apparatus according to the foregoing embodiments may be implemented as code that can be written to a computer-readable recording medium and can thus be read by a processor. The computer-readable recording medium may be any type of recording device in which data can be stored in a computer-readable manner. Examples of the computer-readable recording medium include a ROM, a RAM, a CD-ROM, a magnetic tape, a floppy disk, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for operating an image display apparatus using a remote controller, the method comprising:
receiving a signal from the remote controller;
calculating display coordinates for pointer display based on the received signal;
displaying a first pointer at the calculated display coordinates if the calculated display coordinates are within boundaries of a display screen; and
displaying a second pointer at the boundaries of the display screen if the calculated display coordinates move off of the boundaries of the display screen.

2. The method according to claim 1, wherein the first pointer and the second pointer have different shapes.

3. The method according to claim 1, wherein the displaying the second pointer includes displaying the second pointer in a boundary region of the display screen closest to the calculated display coordinates.

4. The method according to claim 1, wherein the received signal is movement coordinate information of the remote controller or change information of movement coordinates of the remote controller.

5. The method according to claim 1, wherein the displaying the second pointer includes displaying the second pointer such that at least one of the size, shape, contrast, or color of the second pointer is changed according to a distance between the calculated display coordinates and the display screen.

6. The method according to claim 5, wherein the displaying the second pointer includes increasing the size of the second pointer if the distance between the calculated display coordinates and the display screen is increased.

7. The method according to claim 1, further comprising displaying an alarm message or displaying a pointer at a predetermined location if the calculated display coordinates move off of a virtual extension region larger than the boundaries of the display screen.

8. The method according to claim 1, further comprising transmitting apparatus information of an electronic apparatus corresponding to the calculated display coordinates or infrared (IR) format key information to the remote controller if the calculated display coordinates move off of the boundaries of the display screen.

9. The method according to claim 8, wherein the second pointer is an icon corresponding to the electronic apparatus.

10. The method according to claim 8, wherein the transmitting includes transmitting the apparatus information or the IR format key information using a radio frequency (RF) communication method.

11. An image display apparatus using a remote controller, comprising:
a display configured to display a pointer on a display screen;
an interface configured to receive a signal from the remote controller and calculate display coordinates for displaying the pointer based on the received signal; and
a controller configured to control a first pointer to be displayed at the calculated display coordinates if the calculated display coordinates are within boundaries of the display screen and a second pointer to be displayed at the boundaries of the display screen if the calculated display coordinates move off of the display screen.

12. The image display apparatus according to claim 11, wherein the controller controls the shapes of the first pointer and the second pointer to be differently displayed.

13. The image display apparatus according to claim 11, wherein the controller controls the second pointer to be displayed in a boundary region of the display screen closest to the calculated display coordinates.

14. The image display apparatus according to claim 11, wherein the received signal is movement coordinate information of the remote controller or change information of movement coordinates of the remote controller.

15. The image display apparatus according to claim 11, wherein the controller controls the second pointer to be displayed such that at least one of the size, shape, contrast, or color of the second pointer is changed according a distance between the calculated display coordinates and the display screen.
